# EUROPEAN PATENT APPLICATION

(11) **EP 4 836 155 A1**
(43) Date of publication of application: **04.11.2026**
(21) Application number: 25867271.6
(22) Date of filing: 14.11.2025
(51) Int. Cl.: H01M 50/367

(54) **LITHIUM-SULFUR BATTERY PACK**

(30) Priority: 13.03.2025 KR 20250032692
(71) Applicant: LG ENERGY SOLUTION, LTD., Seoul 07335 (KR)
(72) Inventor: LEE, Jung Hoon, Daejeon 34122 (KR); KIM, Hyun Jung, Daejeon 34122 (KR); JANG, Cheol Han, Daejeon 34122 (KR); KIM, Daejeong, Daejeon 34122 (KR)
(74) Representative: Goddar, Heinz J.
(86) International application number: PCT/KR2025/018843
(87) International publication number: WO 2026/192145

(57) **Abstract**

The present disclosure relates to a lithium sulfur battery pack. The lithium sulfur battery pack includes a first cell block formed by stacking a plurality of battery cells; a second cell block formed by stacking a plurality of battery cells and stacked on top of the first cell block; a lower cover positioned below the first cell block, including a protruding region protruding upward to support the first cell block, and guiding a flow of fluid along a venting path formed in a space between the protruding regions; and an upper cover formed to surround the first cell block and the second cell block and mounted on the lower cover.

## Description

### [TECHNICAL FIELD]

The present invention relates to a lithium sulfur battery pack, and more particularly, to a lithium sulfur battery pack having a stacked structure of cell blocks.

### [BACKGROUND ART]

Lithium sulfur batteries are batteries that use a sulfur-carbon composite for the positive electrode and lightweight lithium metal for the negative electrode. These lithium sulfur batteries require pressurization to maintain the shape of the lithium metal during cycling. Additionally, when creating a lithium sulfur battery by stacking cell blocks due to the structure of vehicles, aircraft, and the like, there is a problem that the venting path of the cell blocks becomes narrow.

### [DESCRIPTION OF THE INVENTION]

### [TECHNICAL PROBLEM]

The present invention provides a lithium sulfur battery pack for solving the above problems.

### [SOLUTION TO THE PROBLEM]

The present invention can be implemented in various forms, including a method, an apparatus (system), a computer program stored on a computer-readable medium, or a computer-readable medium having a computer program stored thereon.

A lithium sulfur battery pack according to one embodiment of the present invention includes a first cell block formed by stacking a plurality of battery cells, a second cell block formed by stacking a plurality of battery cells and stacked on top of the first cell block, a lower cover positioned below the first cell block and including a protruding region protruding upward to support the first cell block, and guiding the flow of fluid along a venting path formed in a space between the protruding regions, and an upper cover formed to surround the first cell block and the second cell block and mounted on the lower cover.

According to one embodiment of the present invention, the upper cover includes a first plate formed parallel to the horizontal direction, a second plate connected to the first plate and formed in a shape inclined at a first angle from the horizontal direction, and a third plate connected to the second plate and formed in a shape inclined at a second angle greater than the first angle from the horizontal direction.

According to one embodiment of the present invention, fluid generated in the upper portion of the second cell block moves along the first plate, the second plate, and the third plate to the lower portion of the upper cover.

According to one embodiment of the present invention, a plurality of battery cells included in a first cell block include a first set of battery cells connected by lead welding and a second set of battery cells connected by lead welding and connected to one side of the first set of battery cells.

According to one embodiment of the present invention, the first cell block includes a first pressure plate formed to apply pressure to a plurality of battery cells on a first side and a second pressure plate formed to apply pressure to a plurality of battery cells on a second side located opposite to the first side.

According to one embodiment of the present invention, the first pressure plate and the second pressure plate are coupled to a plurality of battery cells by a pressing action of the jig device.

According to one embodiment of the present invention, the first cell block includes a first busbar frame connected to the first pressure plate and the second pressure plate and located on a third side, and a second busbar frame connected to the first pressure plate and the second pressure plate and located on a fourth side opposite to the third side.

According to one embodiment of the present invention, the lower cover has an area larger than the lower area of the first cell block.

According to one embodiment of the present invention, the area in which the protruding region of the lower cover is formed is equal to the lower area of the first cell block.

A lithium sulfur battery pack according to one embodiment of the present invention comprises a cell stack formed by stacking a plurality of cell blocks including a plurality of battery cells, a lower cover positioned at a lower portion of the cell stack and including a protruding region protruding upward to support the cell stack, and guiding the flow of fluid along a venting path formed in a space between the protruding regions, and an upper cover formed to surround the cell stack and mounted on the lower cover.

According to one embodiment of the present invention, fluid generated on the upper side of the cell stack moves along the first plate, the second plate, and the third plate to the lower side of the upper cover.

According to one embodiment of the present invention, the cell stack includes a first cell block formed by stacking a plurality of battery cells, and a second cell block formed by stacking a plurality of battery cells and stacked on top of the first cell block.

### [ADVANTAGEOUS EFFECTS OF THE INVENTION]

In various embodiments of the present invention, even when a plurality of cell blocks are stacked, the venting path can be prevented from becoming narrow, so that heat generated in a lithium sulfur battery can be effectively discharged.

In various embodiments of the present invention, when applying pressure to a plurality of battery cells using a jig device, the shape of the lithium metal can be maintained during cycle operation, and thus the performance of the battery pack can be effectively improved.

The effects of the present disclosure are not limited to the effects mentioned above, and other unmentioned effects will be clearly understood by one of ordinary skill in the art ("one of ordinary skill in the art") to which the present disclosure pertains from the description of the claims.

### [BRIEF DESCRIPTION OF THE DRAWINGS]

Embodiments of the present disclosure will be described below with reference to the accompanying drawings, wherein like reference numerals refer to like elements, but the present disclosure is not limited thereto.
FIG. 1 is a perspective view showing an exemplary structure of a lithium sulfur battery pack according to one embodiment of the present invention.
FIG. 2 is a side view showing an exemplary structure of a lithium sulfur battery pack according to one embodiment of the present invention.
FIG. 3 is a perspective view showing an example of a lower cover according to one embodiment of the present invention, and FIG. 4 is a drawing showing an example of a cell stack combined with a lower cover according to one embodiment of the present invention.
FIG. 5 is a drawing showing an example of a plurality of battery cells included in a cell block according to one embodiment of the present invention.
FIG. 6 is an exemplary view illustrating the pressing structure of a plurality of battery cells according to one embodiment of the present invention.
FIG. 7 is a perspective view showing an exemplary structure of a first cell block according to one embodiment of the present invention.

### [MODES FOR CARRYING OUT THE INVENTION]

Hereinafter, specific embodiments for carrying out the present disclosure will be described in detail with reference to the accompanying drawings. However, in the following description, specific descriptions of well-known functions or configurations will be omitted if they are likely to unnecessarily obscure the gist of the present disclosure.

In the accompanying drawings, identical or corresponding components are assigned the same reference numerals. Additionally, in the description of the embodiments below, a redundant description of identical or corresponding components may be omitted. However, even if a description of a component is omitted, it is not intended that such a component is excluded from an embodiment.

The advantages and features of the embodiments disclosed herein, and methods for achieving them, will become apparent with reference to the embodiments described below in conjunction with the accompanying drawings. However, the present disclosure is not limited to the embodiments disclosed below but may be embodied in various different forms. These embodiments are provided only to fully disclose the present invention and to fully inform one of ordinary skill in the art of the scope of the disclosure.

The terms used in this specification will be briefly described, and the disclosed embodiments will be described in detail. The terms used herein have been selected from general terms that are currently widely used, while taking into account their functions in the present disclosure. However, these terms may change depending on the intent of a person skilled in the relevant art, judicial precedents, or the emergence of new technologies. In addition, in certain cases, there are terms arbitrarily selected by the applicant, and in such cases, the meanings thereof will be described in detail in the corresponding portion of the description of the disclosure. Therefore, the terms used in the present disclosure should be defined based on their meanings and the overall content of the present disclosure, rather than their simple names.

In this specification, singular expressions include plural expressions unless the context clearly indicates otherwise. In addition, plural expressions include singular expressions unless the context clearly indicates otherwise. Throughout this specification, when a portion is stated to "comprise" a component, this means that it may further include other components and does not exclude other components, unless otherwise stated.

In the present invention, terms such as "comprise" and "comprising" may indicate the presence of features, steps, operations, elements, and/or components, but such terms do not exclude the addition of one or more other functions, steps, operations, elements, components, and/or combinations thereof.

In the present disclosure, when a component is referred to as being "coupled," "combined," "connected," "associated" with, or "reacting" with another component, the component may be directly coupled, combined, connected to, associated with, and/or react with, the other component, but is not limited thereto. For example, there may be one or more intermediate components between one component and another component. Additionally, in the present disclosure, "and/or" may include each of one or more of the listed items or a combination of at least a portion of one or more of the listed items.

In the present disclosure, terms such as "first" and "second" are used to distinguish a component from another component, and the aforementioned components are not limited by these terms. For example, a "first" component may be an element of the same or similar form as a "second" component.

In the present disclosure, 'lithium sulfur battery' and/or 'lithium sulfur cell' may refer to a battery using a sulfur-carbon composite as the positive electrode and lightweight lithium metal as the negative electrode. For example, lithium sulfur batteries, unlike conventional lithium-ion batteries, can generate electrical energy through the stepwise conversion of sulfur. Lithium-sulfur batteries can generate electrical energy by converting sulfur into lithium sulfide, an insoluble substance, through a continuous reduction reaction.

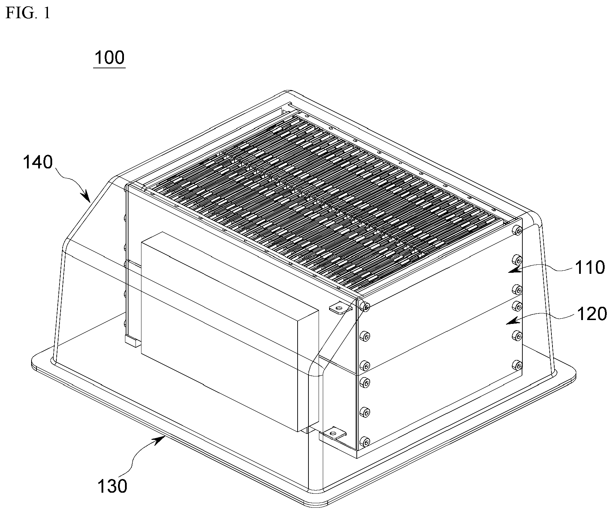

FIG. 1 is a perspective view showing an exemplary structure of a lithium sulfur battery pack 100 according to one embodiment of the present invention. According to one embodiment, a lithium sulfur battery pack 100 may include a cell stack in which a plurality of cell blocks are stacked, and a lower cover 130 and an upper cover 140 that surround the cell stack. For example, such a lithium sulfur battery pack 100 can be used in high-altitude unmanned aerial vehicles, and the like. Here, the plurality of cell blocks constituting the cell stack may include a first cell block 110 and a second cell block 120.

According to one embodiment, a lithium sulfur battery pack 100 may include a first cell block 110 formed by stacking a plurality of battery cells, a second cell block 120 formed by stacking a plurality of battery cells and stacked on top of the first cell block 110, a lower cover 130 positioned below the first cell block 110 and including a protruding region protruding upward to support the first cell block 110, and guiding the flow of fluid along a venting path formed in a space between the protruding regions, and an upper cover 140 formed to surround the first cell block 110 and the second cell block 120 and mounted on the lower cover 130.

According to one embodiment, the lithium sulfur battery pack 100 may include a venting path for effectively dissipating fluids such as heat generated in the cell block. For example, the lower cover 130 of the lithium sulfur battery pack 100 may include a protruding region for guiding fluid generated from the lower portion of the second cell block 120. In this case, the cell stack and/or the second cell block 120 can be placed on the protruding area of the lower cover 130, and a venting path can be formed through the space between these protruding areas. Additionally, the upper cover 140 of the lithium sulfur battery pack 100 may include a plate structure for guiding fluid generated from the upper portion of the first cell block 110.

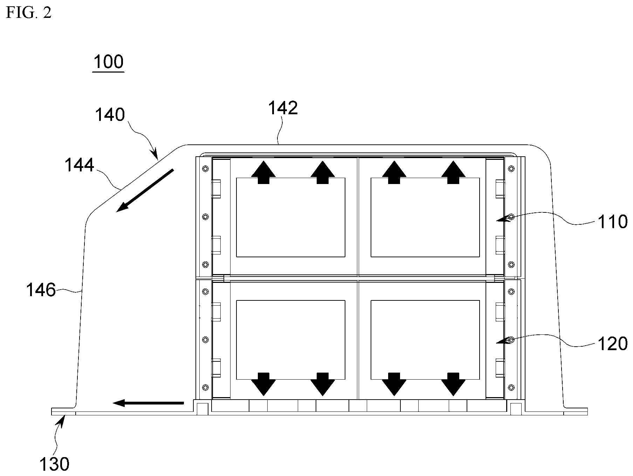

FIG. 2 is a side view showing an exemplary structure of a lithium sulfur battery pack 100 according to one embodiment of the present invention. As described above, the lithium sulfur battery pack 100 may include a venting path for effectively discharging fluid such as heat generated in the cell block, and the lower cover 130 and upper cover 140 of the lithium sulfur battery pack 100 may include a plate structure for guiding fluid generated in the cell stack.

As illustrated, the upper cover 140 may include a first plate 142 formed in a horizontally parallel manner, a second plate 144 connected to the first plate 142 and formed in a shape inclined at a first angle from the horizontal direction, and a third plate 146 connected to the second plate 144 and formed in a shape inclined at a second angle greater than the first angle from the horizontal direction. In this case, the fluid generated from the upper portion of the first cell block 110 can move downward along the first plate 142, the second plate 144, and the third plate 146.

Additionally, the lower cover 130 includes a protruding region protruding upward, and fluid generated from the lower portion of the second cell block 120 can move along a venting path formed in the space between the protruding regions. In this case, the fluid guided or induced by the upper cover 140 and the lower cover 130 can be discharged to the outside of the lithium sulfur battery pack 100 through the discharge structure formed in the upper cover 140.

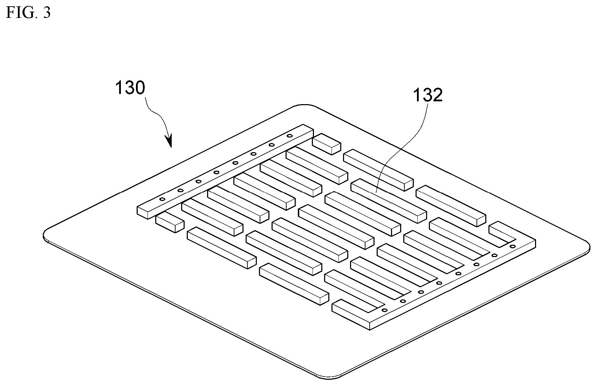

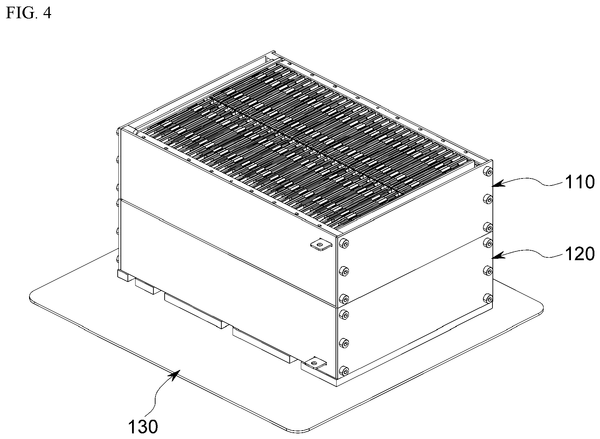

FIG. 3 is a perspective view showing an example of a lower cover 130 according to one embodiment of the present invention, and FIG. 4 is a drawing showing an example of a cell stack combined with a lower cover 130 according to one embodiment of the present invention. According to one embodiment, the lower cover 130 may include a protruding region 132 that protrudes upward in some areas to support the cell block and/or the cell stack. As illustrated, the protrusion region 132 may include a plurality of protrusions having an arbitrary arrangement such as a maze structure, but is not limited to the structure illustrated. That is, the plurality of protrusions forming the protrusion area 132 may have different numbers and arrangements.

According to one embodiment, terminal protrusions of the protruding region 132 may include a plurality of holes for coupling with the cell stack and/or the cell block. The lower cover 130 has an area larger than the lower area of the cell stack and/or the first cell block 110 and the second cell block 120, and an area in which the protruding region 132 of the lower cover 130 is formed may be formed to be the same as the lower area of the cell stack and/or the first cell block 110 and the second cell block 120.

That is, the fluid generated from the upper portion of the first cell block 110 can be guided or induced through a venting path formed by the upper cover, and the fluid generated from the lower portion of the second cell block 120 can be guided or induced through a venting path formed by the lower cover 130. By this structure, even when multiple cell blocks are stacked, the venting path is prevented from becoming narrow, so that heat generated in the lithium sulfur battery can be effectively discharged.

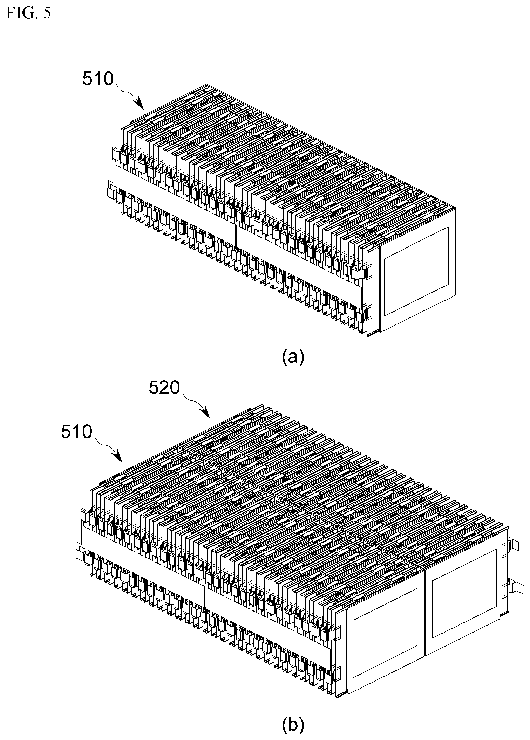

FIG. 5 is a drawing showing an example of a plurality of battery cells included in a cell block according to one embodiment of the present invention. According to one embodiment, a cell block may include a plurality of battery cells. In the illustrated example, (a) the image may represent a first set of battery cells 510 in which each battery cell is stacked, and (b) the image may represent a first set of battery cells 510 and a second set of battery cells 520 connected.

In one embodiment, each battery cell may be connected by lead welding. For example, a lead may refer to an electrode tab of a battery, and lead welding may include resistance welding, ultrasonic welding, laser welding, TIG (tungsten inert gas welding), and the like. In this way, a certain number of battery cells can be connected and stacked by lead welding to produce a first set of battery cells 510 and a second set of battery cells 520. Additionally, a basic cell structure for forming a cell block can be created by connecting the first set of battery cells 510 and the second set of battery cells 520 generated in this manner.

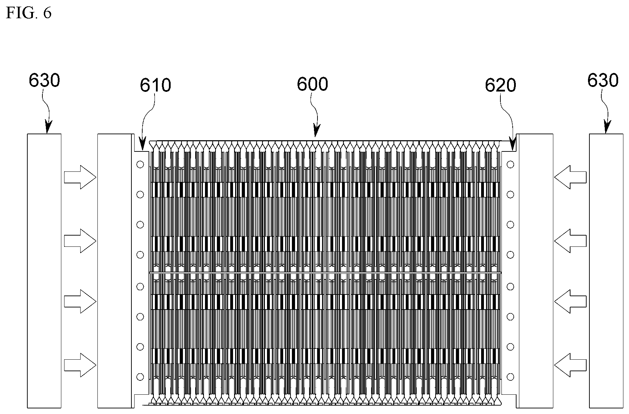

FIG. 6 is an exemplary drawing showing a pressing structure of a plurality of battery cells 600 according to one embodiment of the present invention. As illustrated, a pressure plate may be fastened on a plurality of battery cells 600 formed by connecting a first set of battery cells (510 in FIG. 5) and a second set of battery cells (520 in FIG. 5).

According to one embodiment, a plurality of battery cells 600 may be connected to a first pressure plate 610 formed to apply pressure to the plurality of battery cells 600 from a first side and a second pressure plate 620 formed to apply pressure to the plurality of battery cells 600 from a second side located opposite the first side. In this case, the first pressure plate 610 and the second pressure plate 620 can be combined with a plurality of battery cells 600 by a pressing action of a jig device 630, and can be made of a lightweight composite material or aluminum.

Here, the jig device 630 may refer to a device that applies pressure to the cell block to maintain the shape of the lithium metal, and may be fastened before mounting the cell block to the pack. In this way, when applying pressure to a plurality of battery cells 600 using a jig device 630, the shape of the lithium metal can be maintained during cycle operation, and thus the performance of the battery pack can be effectively improved.

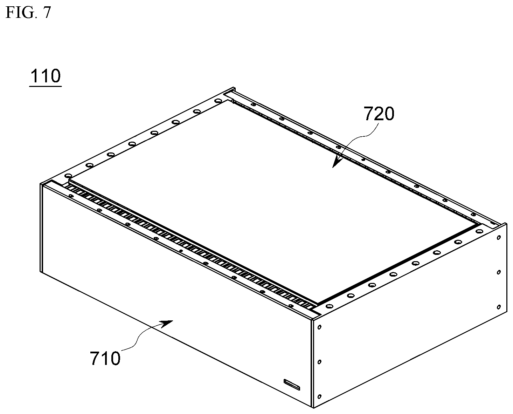

FIG. 7 is a perspective view showing an exemplary structure of a first cell block 110 according to one embodiment of the present invention. According to one embodiment, the first cell block 110 (and/or the second cell block) may be formed by assembling a plurality of busbar frames and end covers 710 on a plurality of battery cells to which a press plate is fastened by a jig device. For example, a plurality of busbar frames and end covers 710 may be assembled while the jig device is fastened.

According to one embodiment, the first cell block 110 may include a first busbar frame connected to the first pressure plate and the second pressure plate and located on a third side, and a second busbar frame connected to the first pressure plate and the second pressure plate and located on a fourth side opposite to the third side. In this way, resin and a heater 720 may be assembled to the first cell block 110 to which the busbar frames and end covers are coupled.

The various embodiments of the present invention, including specific structural and functional details, are exemplary. Therefore, the embodiments of the present invention are not limited to those described above and may be implemented in various other forms. Additionally, the terms used in the present invention are intended to describe some embodiments and are not to be construed as limiting the embodiments. For example, singular words and the like may be interpreted to include the plural as well, unless the context clearly indicates otherwise.

In the present disclosure, unless otherwise defined, all terms used herein, including technical and scientific terms, shall have the same meaning as commonly understood by those of ordinary skill in the art to which the embodiments pertain. Additionally, commonly used terms, such as terms defined in a dictionary, should be interpreted to have a meaning consistent with their meaning in the context of the relevant technology.

Although the present invention has been described in connection with some embodiments herein, various modifications and changes can be made without departing from the scope of the present invention as understood by those skilled in the art to which the present invention pertains. Furthermore, such modifications and variations should be considered to fall within the scope of the claims appended to this specification.

## Claims

1. A lithium sulfur battery pack comprising:
a first cell block formed by stacking a plurality of battery cells;
a second cell block formed by stacking a plurality of battery cells and stacked on top of the first cell block;
a lower cover positioned below the first cell block and including a protruding region protruding upward to support the first cell block, and guiding a flow of fluid along a venting path formed in a space between the protruding regions; and
an upper cover formed to surround the first cell block and the second cell block and mounted
on the lower cover.

2. The lithium sulfur battery pack of claim 1, wherein
the upper cover comprises:
a first plate formed parallel to a horizontal direction;
a second plate connected to the first plate and formed in a shape inclined at a first angle from the horizontal direction; and
a third plate connected to the second plate and formed in a shape inclined at a second angle greater than the first angle
from the horizontal direction.

3. The lithium sulfur battery pack of claim 2, wherein
fluid generated in an upper portion of the second cell block moves to a lower portion of the upper cover along the first plate, the second plate, and the third plate.

4. The lithium sulfur battery pack of claim 1, wherein
the plurality of battery cells included in the first cell block comprise:
a first set of battery cells connected by lead welding; and
a second set of battery cells connected by lead welding and connected to one side of the first set
of battery cells.

5. The lithium sulfur battery pack of claim 1, wherein
the first cell block comprises:
a first pressure plate formed to apply pressure to the plurality of battery cells on a first side; and
a second pressure plate formed to apply pressure to the plurality of battery cells on a second side located
to the first side.

6. The lithium sulfur battery pack of claim 5, wherein
the first pressure plate and the second pressure plate are
coupled to the plurality of battery cells by a pressing action of a jig device.

7. The lithium sulfur battery pack of claim 5, wherein
the first cell block comprises:
a first busbar frame connected to the first pressure plate and the second pressure plate and located on a third side; and
a second busbar frame connected to the first pressure plate and the second pressure plate and located on a fourth side
to the third side.

8. The lithium sulfur battery pack of claim 1, wherein
the lower cover
has an area larger than a lower area of the first cell block.

9. The lithium sulfur battery pack of claim 1, wherein
an area where the protruding region of the lower cover is formed is equal to a lower area of the first cell block.

10. A lithium sulfur battery pack comprising:
a cell stack formed by stacking a plurality of cell blocks including a plurality of battery cells;
a lower cover positioned at a lower portion of the cell stack and including a protruding region protruding upward to support the cell stack, and guiding a flow of fluid along a venting path formed in a space between the protruding regions; and
an upper cover formed to surround the cell stack and mounted
on the lower cover.

11. The lithium sulfur battery pack of claim 10, wherein
the upper cover comprises:
a first plate formed parallel to a horizontal direction;
a second plate connected to the first plate and formed in a shape inclined at a first angle from the horizontal direction; and
a third plate connected to the second plate and formed in a shape inclined at a second angle greater than the first angle
from the horizontal direction.

12. The lithium sulfur battery pack of claim 11, wherein
fluid generated from an upper portion of the cell stack moves to a lower portion of the upper cover along the first plate, the second plate, and the third plate.

13. The lithium sulfur battery pack of claim 10, wherein
the cell stack comprises:
a first cell block formed by stacking a plurality of battery cells; and
a second cell block formed by stacking a plurality of battery cells and stacked on top of the first cell block;
on top of the first cell block.

14. The lithium sulfur battery pack of claim 13, wherein
the plurality of battery cells included in the first cell block comprise:
a first set of battery cells connected by lead welding; and
a second set of battery cells connected by lead welding and connected to one side of the first set
of battery cells.

15. The lithium sulfur battery pack of claim 13, wherein
the first cell block comprises:
a first pressure plate formed to apply pressure to the plurality of battery cells on a first side; and
a second pressure plate formed to apply pressure to the plurality of battery cells on a second side located
opposite to the first side.

16. The lithium sulfur battery pack of claim 15, wherein
the first pressure plate and the second pressure plate are
coupled to the plurality of battery cells by a pressing action of a jig device.

17. The lithium sulfur battery pack of claim 15, wherein
the first cell block comprises:
a first busbar frame connected to the first pressure plate and the second pressure plate and located on a third side; and
a second busbar frame connected to the first pressure plate and the second pressure plate and located on a fourth side
opposite to the third side.

18. The lithium sulfur battery pack of claim 10, wherein
the lower cover
has an area larger than a lower area of the cell stack.

19. The lithium sulfur battery pack of claim 10, wherein
an area where the protruding region of the lower cover is formed is equal to a lower area of the cell stack.
